# FASCICULE DE BREVET EUROPEEN

(11) **EP 2 801 717 B1**
(45) Date de publication et mention de la délivrance du brevet: **20.07.2016**
(21) Numéro de dépôt: 13368017.3
(22) Date de dépôt: 14.06.2013
(51) Int. Cl.: B01J 19/08, F02M 27/04, F23C 99/00

(54) **Dispositif et procédé destinés à faciliter la combustion de mélanges hydrocarbures fluides ou gazeux et de l'air de combustion**
Vorrichtung und Verfahren, die die Verbrennung von flüssigen oder gasförmigen Kohlenwasserstoffmischungen und Verbrennungsluft erleichtern sollen
Device and method for facilitating the combustion of mixtures of fluid or gaseous hydrocarbons and combustion air

(30) Priorité: 06.05.2013 FR 1301048
(43) Date de publication de la demande: 12.11.2014
(73) Titulaire: Vos. Tecs. International S.A.R.L., 98001 Monaco Cedex (MC)
(72) Inventeur: Spacoli, Marina, 98001 Monaco Cedex (FR)
(74) Mandataire: Schuffenecker, Thierry

(56) Documents cités:
- EP-A2- 0 544 395
- US-A- 4 933 151

## Description

### Domaine technique de l'invention

La présente invention concerne le domaine des systèmes écologiques exploitant les effets des champs magnétiques naturel sur les fluides, et notamment un dispositif destiné à faciliter la combustion de mélanges hydrocarbures fluides ou gazeux et de l'air de combustion.

Un tel dispositif est connu du document US 4933151 A qui décrit en combinaison les caractéristiques du préambule de la revendication 1 et de la revendication 8.

Le système ne nécessite aucun connexion électrique il exploit le champ magnétique naturel.

### Etat de la technique

Les hydrocarbures peuvent être définis comme un ensemble de composés chimiques, constitués essentiellement d'atomes de carbone et d'hydrogène liés entre eux par la coparticipation d'électrons de valence auxquels est associée une énergie de liaison/association (inter- tensions périphériques ).

En conditions dynamiques, tout fluide, soumis à un champ magnétique, peut absorber des forces qui agissent tant au niveau électronique que nucléaire. Le fait de modifier les orbites des électrons les plus périphériques, donne aussi lieu à la modification des propriétés électroniques d'un simple atome ou molécule et par conséquent leur capacité d'interagir chimiquement avec un autre atome ou molécule.

Dans les molécules de combustible les atomes d'hydrogène sont tous placés vers l'extérieur, tandis que ceux de carbone en occupent la partie interne. En effet, les caractéristiques du lien chimique - et de la chaîne des réactions qui suit, et qui détermine la typologie d'un atome, provient des lois qui gouvernent le nuage électronique.

Lors de la combustion d'un hydrocarbure, l'on cherche en général à influer la configuration électronique notamment en venant apporter une énergie supplémentaire à la molécule de manière à affaiblir la liaison C - H au sein de la molécule.

Avec pour résultat une modification des caractéristiques physiques du combustible amenant à son meilleur mélange avec l'oxygène et, finalement, une réduction de la quantité d'énergie requise pour activer la combustion.

C'est le problème technique à résoudre par l'objet de la présente invention.

### Exposé de l'invention

La présente invention a pour but de proposer un nouveau dispositif permettant d'assurer une magnétisation "cohérente" d'un fluide : combustible hydrocarbure ou de l'air de combustion pour en faciliter l'interaction paramagnétique entre ses différents éléments constituants.

La présente invention a également pour but un dispositif susceptible d'améliorer la cinétique et la thermodynamique d'une combustion d'un hydrocarbure.

Un autre but de la présente invention consiste à proposer un dispositif destiné à faciliter la combustion d'un mélange hydrocarbure fluide ou gazeux et de l'air de combustion.

L'invention réalise ces buts au moyen d'un dispositif destiné à faciliter la combustion d'un mélange hydrocarbure fluide ou gazeux comportant :
- un tube interne destiné à recevoir l'écoulement dudit mélange, le tube interne comportant de part et d'autre deux raccords ;
- un anneau magnétique central destiné à générer un champ magnétique axial dans le voisinage du centre dudit tube interne;
- deux anneaux magnétiques situés de part et d'autre et maintenu à une distance prédéterminée dudit anneau magnétique central ;
- un premier pont de connexion permettant une connexion des deux anneaux magnétiques sans connexion toutefois avec l'anneau magnétique central;
- deux ponts de connexion permettant une connexion entre ledit anneau magnétique central et chacun des anneaux magnétique de bout en bout.

Dans un mode de réalisation particulier, le dispositif comporte en outre un carter fermé destiné à protéger lesdits anneaux magnétiques ainsi que les ponts de connexion. De préférence, le carter est formé d'un tube externe doté de deux flasques latérales, comportant des orifices permettant la sortie, de part et d'autre, du tube interne.

Dans un mode de réalisation particulier, le dispositif comporte des espaceurs destinés à maintenir une distance respective entre les anneaux magnétiques et éviter une connexion intempestive entre lesdits ponts de connexion et la paroi du carter.

De préférence, les espaceurs se présentent sous la forme de manchons permettant de maintenir constante une distance entre le anneau magnétique central et chacun des anneaux magnétiques situé de part et d'autre du tube interne.

De préférence, le dispositif comporte également des espaceurs en forme de manchons permettant de maintenir constante l'espacement entre les anneaux magnétiques en bout du tube interne et la flasque latérale correspondante du carter.

L'invention permet également la réalisation d'une méthode destinée à faciliter la combustion d'un mélange hydrocarbure fluide ou gazeux et de l'air de combustion comportant les étapes suivantes :
- faire circuler ledit mélange hydrocarbure au sein d'un tube interne, le tube interne comportant de part et d'autre deux raccords ;
- générer au sein du tube interne un premier champ magnétique central et axial au moyen d'un anneau magnétique central disposé au centre dudit tube interne;
- générer aux deux extrémités du tube interne un champ magnétique axial au moyen, respectivement, d'un premier et d'un second anneau magnétique en extrémité et maintenus à une distance prédéterminée dudit anneau magnétique central;
- réaliser un premier pont de connexion magnétique entre le premier et le second anneau magnétique en évitant toutefois toute connexion avec l'anneau magnétique central ;
- réaliser deux ponts de connexion supplémentaires entre l'anneau magnétique central et chacun des anneaux magnétiques situés de bout en bout.

### Description des dessins

D'autres caractéristiques, but et avantages de l'invention apparaîtront à la lecture de la description et des dessins ci-après, donnés uniquement à titre d'exemples non limitatifs. Sur les dessins annexés :
La figure 1 illustre une vue d'un dispositif comportant un tube doté de deux raccords et de trois anneaux magnétiques.
La figure 2 représente une coupe du dispositif illustré en figure 1.
La figure 3 illustre une vue du dispositif comportant en outre des espaceurs ou entretoises.
La figure 4 illustre plus particulièrement une coupe du dispositif mettant en évidence les espaceurs 21-24.
Les figures 5 et 6 illustrent respectivement une vue et une coupe du dispositif mettant en évidence les ponts supérieurs 31 et inférieurs 32-33.
La figure 7 illustre une vue complète du dispositif, à l'intérieur de son carter de protection comportant un tube externe 43 et deux flasques 41 et 42.

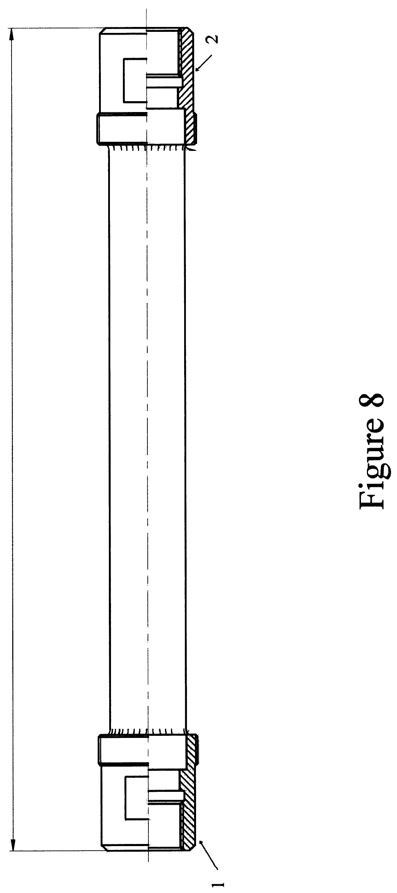

La figure 8 représente une vue du tube interne 10 doté de ses deux raccords 1 et 2 dans l'exemple de type ¾"
Les figures 9a et 9b illustrent respectivement une coupe et une vue de chacune des flasques, par exemple la flasque 41, adaptée pour un débit de ¾ de pouces.
Les figures 10a et 10b illustrent respectivement une coupe et une vue de chacun des raccords, adaptés pour un débit de % de pouces.
Les figures 11a et 11b illustrent respectivement une vue et une section d'un mode de réalisation du pont supérieur 31 permettant la connexion magnétique entre les deux anneaux magnétiques extrêmes 12 et 13.
Les figures 12a et 12b illustrent respectivement une vue et une section d'un mode de réalisation de l'un des deux pont inférieurs 32 permettant la connexion magnétique entre l'un des deux anneaux magnétiques extrêmes 12 et 13 avec l'anneau magnétique central 11.
La figure 13a illustre plus particulièrement une coupe et une section de l'une des deux entretoises magnétiques centrales.
La figure 13b illustre plus particulièrement une coupe et une section de l'entretoise magnétique en extrémité.
La figure 14a illustre plus particulièrement une coupe et une section de l'anneau magnétique central 11.
La figure 14b illustre plus particulièrement une coupe et une section de l'un des deux anneaux magnétiques 12 ou 13.
Les figures 15a illustre respectivement une coupe et section du tube externe 43.
La figure 15b illustre respectivement une coupe et une section du tube interne 10.
La figure 16 illustre plus particulièrement une coupe et une vue d'une pince permettant la fixation et la connexion des ponts, respectivement supérieurs et inférieurs, sur leur anneaux magnétiques respectifs.
Les figures 17a et 17b illustrent respectivement une coupe et une section d'un autre mode de réalisation, pour un débit diffèrent par exemple adapté à une section de 2 pouces.

### Description d'un mode de réalisation préféré

L'on décrit à présent la structure modulaire d'un dispositif magnétique permettant d'améliorer la combustion d'un mélange hydrocarbure fluide ou gazeux et de l'air de combustion en venant polariser magnétiquement les liaisons valences C-H des molécules d'hydrocarbures.

D'une manière générale, l'on décrit ci-après la structure générale d'un dispositif conforme à la présente invention, étant entendu que le dimensionnement exact du dispositif dépend clairement du débit de carburant considéré et qu'un homme du métier pourra aisément modifier et adapter le dispositif décrit pour répondre à une grande variété d'applications.

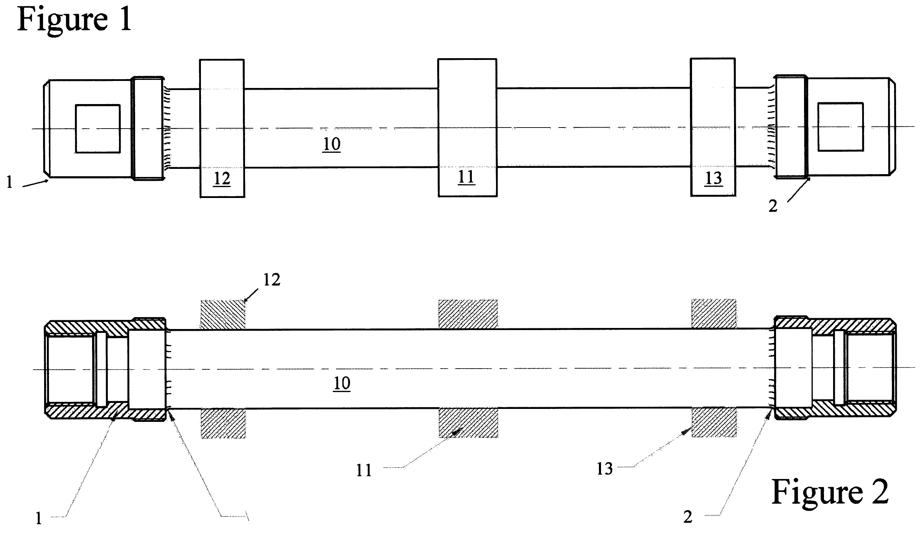

La structure complète d'un dispositif conforme à la présente invention sera décrite en relation avec les figures 1 à 7.

Comme ce que l'on voit avec la vue de la figure 1, et la coupe correspondante de la figure 2, le dispositif comporte d'abord un tube interne 10 destiné à permettre l'écoulement du mélange hydrocarbure fluide ou gazeux. De manière à permettre la connexion du dispositif à tout circuit quelconque, le dispositif comporte en outre deux connecteurs ou raccords 1 et 2 disposés en bouts du tube 10, filetés ou bridés selon la quantité de fluide à traiter. Le dimensionnement des raccords 1 et 2 ainsi que celui du tube 10 dépendront du débit que l'on souhaiterait faire traiter au sein du dispositif.

A titre d'illustration non limitative, l'on décrira plus particulièrement un dispositif 10 doté de raccords 1 et 2 de type ¾ de pouces.

D'une manière générale, et sans que cela soit limitatif, le tube 10 et les raccords 1 et 2 sont constitués en acier inoxydables, par exemple de type AISI 304 ou de leur version alimentaire pour la conduction d'eau AISI 316 L.

Le dispositif comporte en outre un jeu de trois manchons ou anneaux magnétiques 11-12-13 disposés le long du tube interne 10 destinés à générer un champ magnétique axial. Plus spécifiquement, le dispositif comporte un anneau central 11 (par exemple de largeur 20mm pour un raccord de ¾ de pouces) et, situés de part et d'autre de ce dernier, deux anneaux magnétiques 12 et 13, de dimension plus réduite (par exemple de largeur 15mm pour un raccord de ¾ de pouce).

Dans un mode de réalisation particulier, les anneaux magnétiques 11-13 sont réalisés au moyen d'un matériau de type Samarium et de ferrite, de manière à générer un champ magnétique axial significatif au sein des molécules d'hydrocarbures et de l'air circulant au sein du tube interne 10. Dans un mode de réalisation particulier, l'on disposera un champ magnétique d'environ 1000 à 3000 Gauss, et de préférence 2000 Gauss.

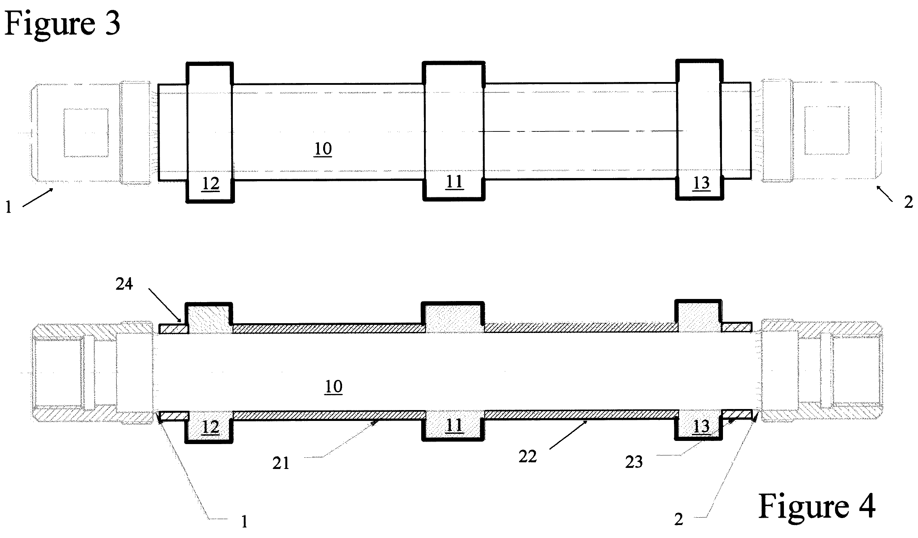

Dans un mode de réalisation spécifique, les anneaux magnétiques 11-13 sont maintenus en place sur le tube interne 10 au moyen d'un jeu d'entretoises ou d'espaceurs, respectivement 21, 22, 23 et 24 comme ce que l'on voit dans la coupe de la figure 4 et la vue correspondante de la figure 3.

Plus particulièrement, les anneaux magnétiques 12 et 13 sont maintenus à une distance prédéterminée du anneau central 11 au moyen des espaceurs 21 et 22, respectivement.

De la même manière, les anneaux magnétiques 12 et 13 sont maintenus à distance des raccords, respectivement 1 et 2 via les espaceurs 24 et 23.

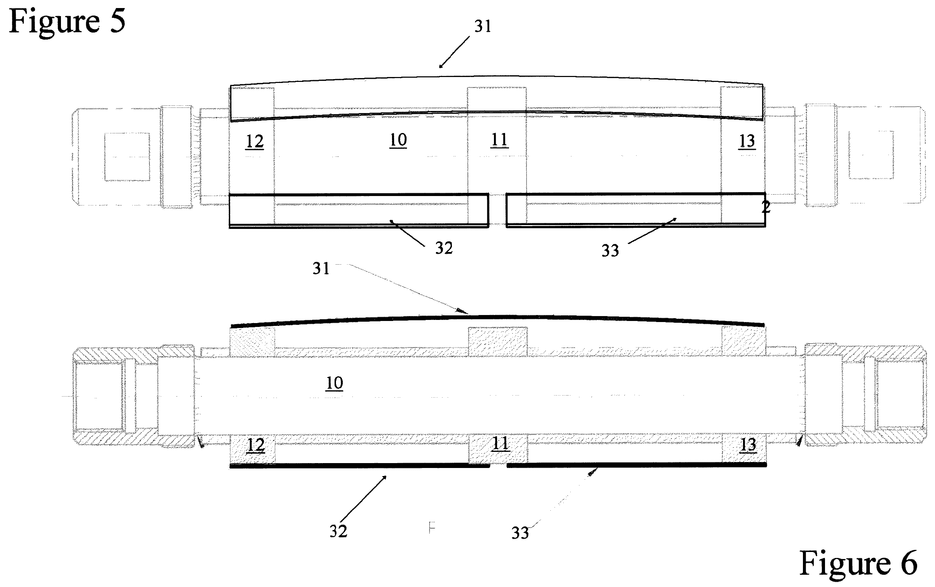

Dans le dispositif qui est décrit, le rôle des espaceurs est important pour une double raison :
- en premier lieu, ces espaceurs permettent de maintenir en position les trois anneaux magnétiques 11-13 et , par conséquent, de préserver un champ magnétique homogène au sein du tube interne 10 dans lequel s'écoule le mélange hydrocarbure gazeux ou fluide ou de l'air;
- en second lieu, ces espaceurs permettront de maintenir hors contact avec le carter extérieur d'un jeu de ponts de connexion 31-33 qui seront décrit à présent en relation avec les vues et coupes des figures 5 et 6.

Comme ce que l'on voit dans les figures 5 et 6, le dispositif comporte un jeu de ponts, respectivement supérieur et inférieurs, permettant de réaliser une connexion magnétique entre les anneaux magnétiques.

En particulier, le dispositif comporte un premier pont supérieur 31, réalisé en cuivre (*copper cathode* suivant la littérature anglo-saxonne) permettant de réaliser une connexion magnétique entre les deux anneaux extrêmes 12 et 13.

D'une manière particulière, le pont 31 est réalisé au moyen d'une bande de cuivre, d'environ 3mm de largeur et de préférence inférieure à 1 mm d'épaisseur.

En outre, le dispositif comporte deux ponts inférieurs, respectivement 32 et 32, également réalisés au moyen d'une bande de cuivre (*copper cathode*) permettant de connecter, respectivement, les paires d'anneaux magnétiques 12-11 et 11-13.

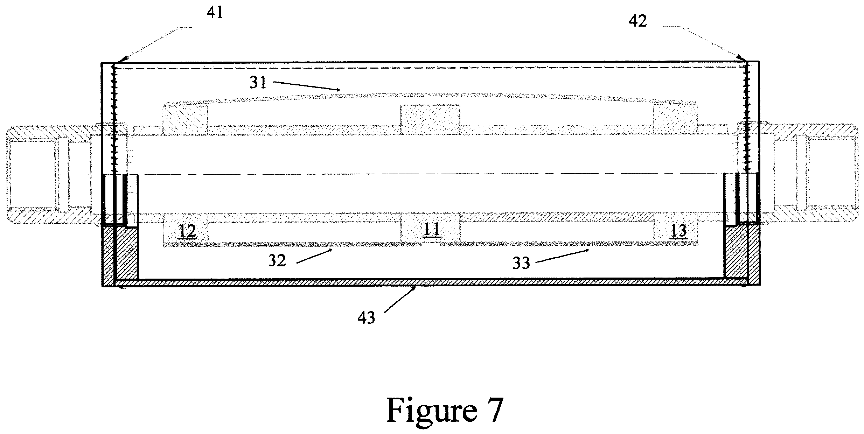

Comme on le voit dans la disposition de la figure 6, le pont supérieur 31 présente une longueur suffisante pour éviter tout contact magnétique avec l'anneau central 11, mais également avec un tube externe 43 qui est illustré dans la figure 7.

La figure 7 illustre une vue complète du dispositif, dans lequel on retrouve le tube interne 10, les trois anneaux magnétiques 11-13 et leurs ponts respectifs 31-33, le tout disposé à l'intérieur d'un tube externe 43 maintenu hors contact des ponts 31-33, et formant, avec deux flasques latérales 41 et 42 un carter fermé permettant de préserver et protéger l'ensemble du dispositif.

Les figures qui suivent illustrent plus particulièrement certains éléments constitutifs du dispositif qui vient d'être décrit.

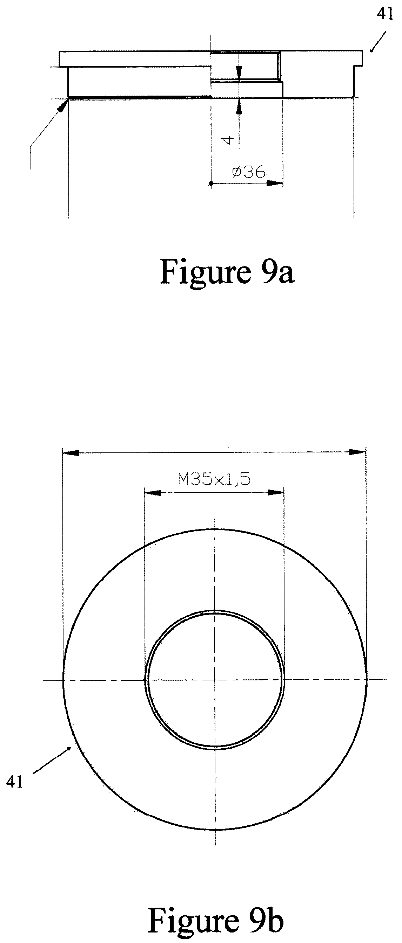

En particulier, les figures 9a et 9b illustrent respectivement une coupe et une vue de chacune des flasques, par exemple la flasque 41, adaptée pour un débit de ¾ de pouces. Les exemples de côtes dimensionnelles qui sont indiquées sont particulièrement adapté à un débit correspondant à une section ¾ de pouces. Clairement, l'on pourra réadapter la structure à d'autres diamètres, notamment 2 pouces, etc...

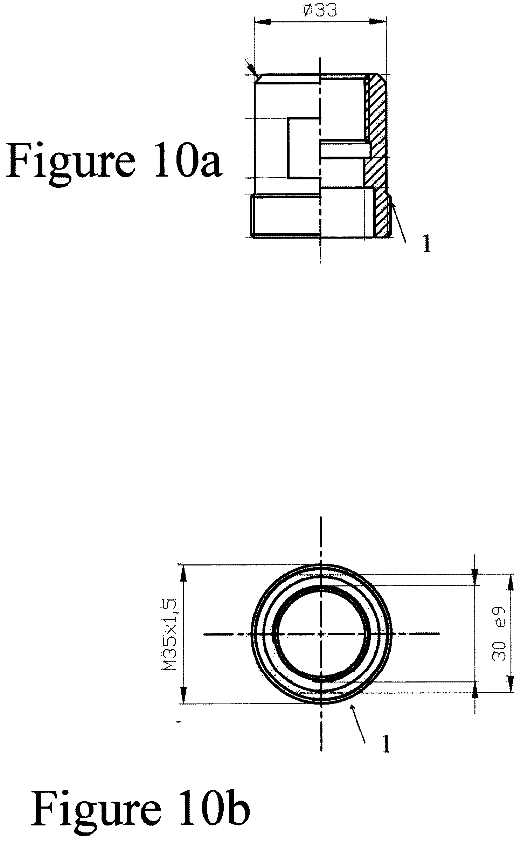

De la même manière, les figures 10a et 10b illustrent respectivement une coupe et une vue de chacun des raccords, adaptés pour un débit de ¾ de pouces. Une fois encore les côtes dimensionnelles ne sont indiquées qu'à titre illustratif et pourront être adaptées à toute autre application, et notamment à des débits plus importants.

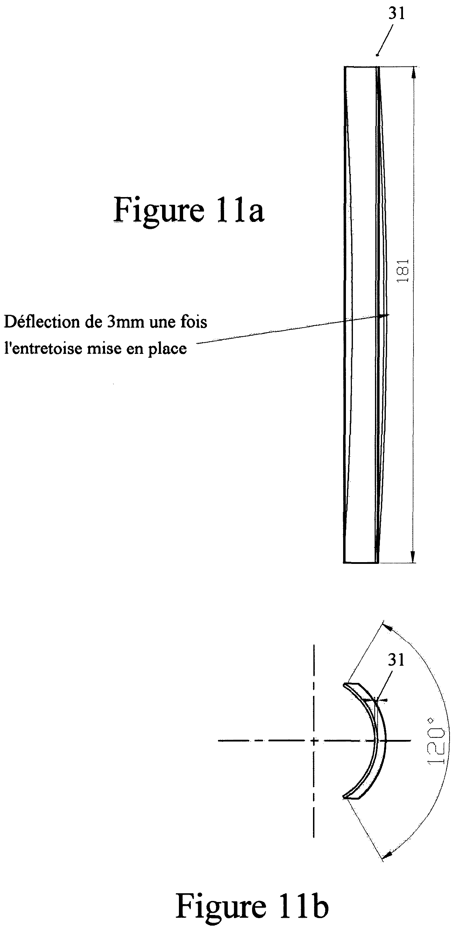

Les figures 11 a et 11 b illustrent respectivement une vue et une section du pont supérieur 31 permettant la connexion magnétique entre les deux anneaux magnétiques extrêmes 12 et 13. Dans un mode de réalisation particulier, une fois mis en place et les anneaux magnétiques 11-13 correctement positionnés grâce aux espaceurs 21-22, le pont 31 présente une déflection de l'ordre de 3mm permettant d'éviter un contact avec l'anneau central 11. Le pont présente également un arc de cercle de 120 degrés.

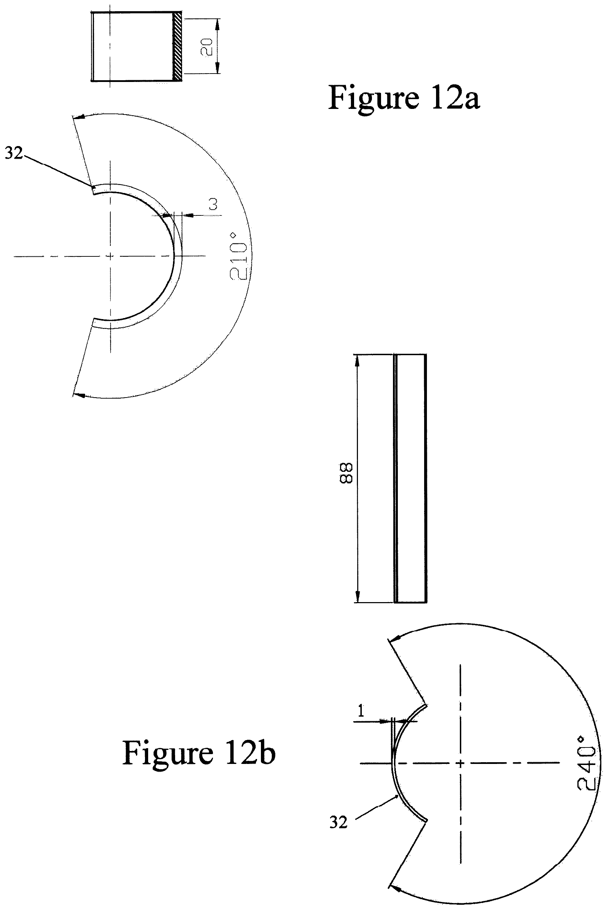

Les figures 12a et 12b illustrent respectivement une vue et une section d'un mode de réalisation de l'un des deux pont inférieurs 32 permettant la connexion magnétique entre l'un des deux anneaux magnétiques extrêmes 12 et 13 avec le anneau magnétique central 11. Des côtes dimensionnelles sont indiquées à titre illustratif pour un débit de % de pouces, qui pourront être clairement adaptées à d'autres valeurs de débit. L'on constate un arc de cercle de 240° suivant un mode de réalisation de l'invention.

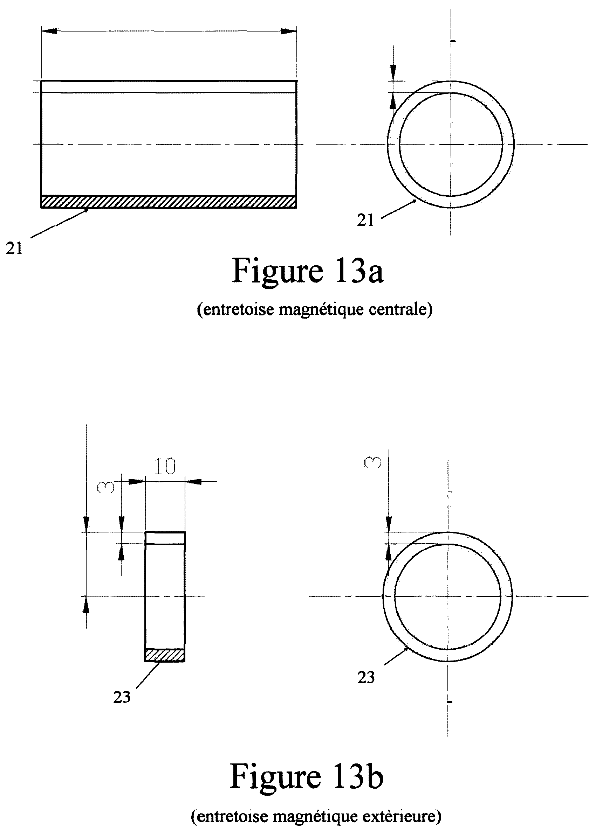

La figure 13a illustre plus particulièrement une coupe et une section de l'une des deux entretoises magnétiques centrales, en forme d'anneau, (et des côtes de dimensionnement illustratives) permettant de maintenir l'écart entre les anneaux magnétiques 12/11 et 13/11.

La figure 13b illustre plus particulièrement une coupe et une section de l'entretoise magnétique en extrémité, également en forme d'anneau, permettant de maintenir l'espacement entre les anneaux magnétiques extrêmes 12 et 13 et les flasques correspondants (resp. 41, 42).

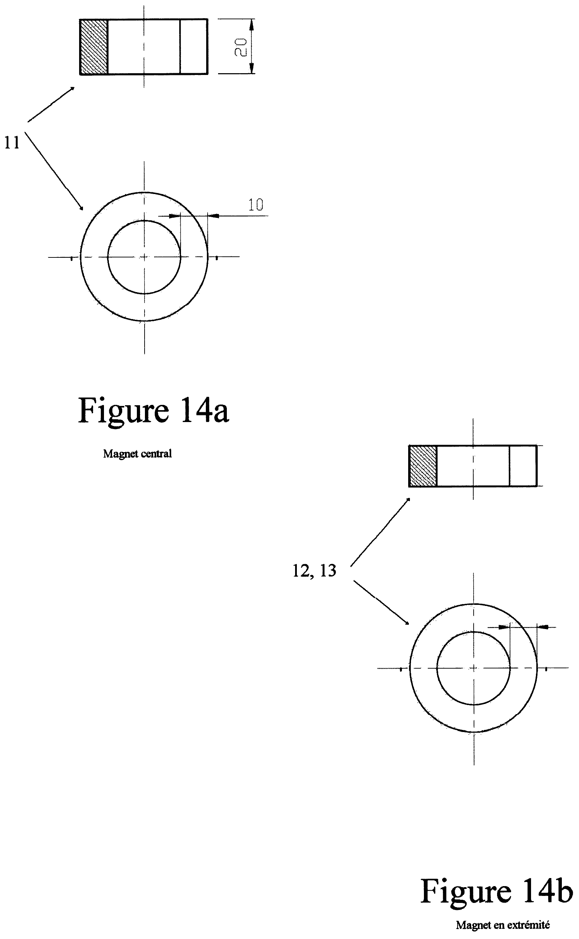

La figure 14a illustre plus particulièrement une coupe et une section de l'anneau magnétique central 11, en forme d'anneau, avec un exemple de côtes dimensionnel adapté à une section de % de pouces.

La figure 14b illustre plus particulièrement une coupe et une section de l'un des deux anneaux magnétiques 12 ou 13, en forme d'anneau ou de collerette.

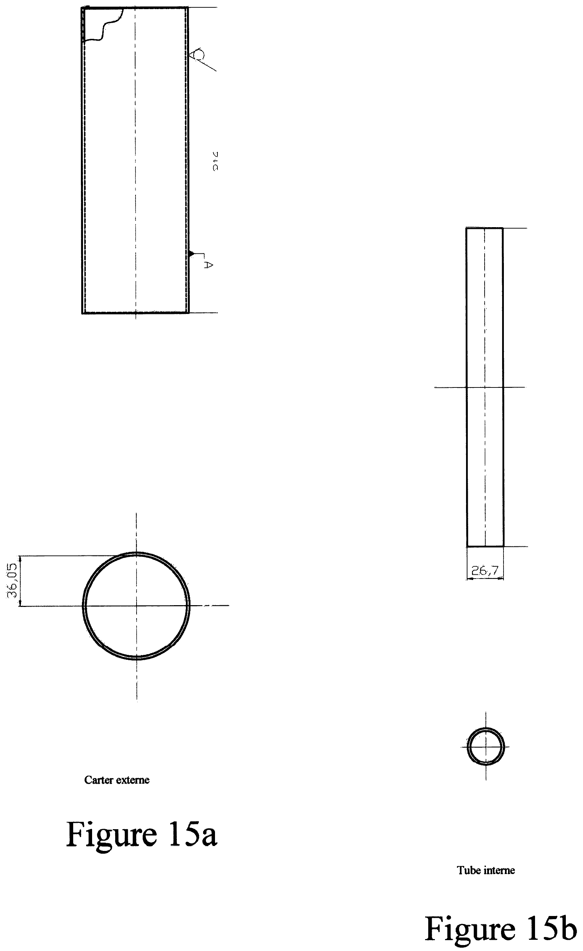

Les figures 15a illustre respectivement une coupe et section du tube externe 43. La figure 15b illustre respectivement une coupe et une section du tube interne 10.

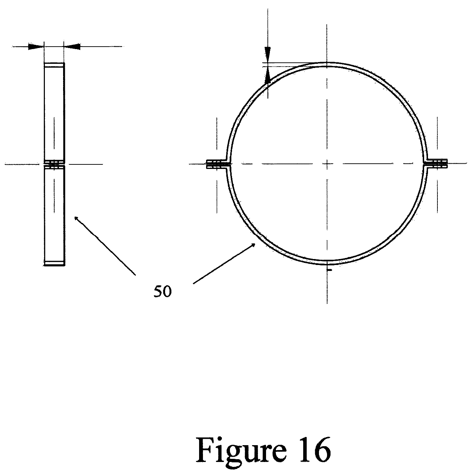

La figure 16 illustre plus particulièrement une coupe et une vue d'une bride 50 permettant la fixation et la connexion des ponts , respectivement supérieurs et inférieurs, sur leur anneaux magnétiques respectifs. Cette fixation par bride de la bande plate constitutive des ponts 31-33 permet de maintenir une rigidité à l'ensemble et notamment d'éviter que les ponts supérieur/inférieurs n'entrent en contact avec la paroi du tube externe 43.
Utilisation du laiton comme conducteur et comme système de blindage - pour contenir le champ magnétique orientée vers l'intérieur. Le laiton est connu pour être un très bon conducteur et pour créer un écran pour contenir le champ magnétique et renforcer la puissance vers l'intérieur.

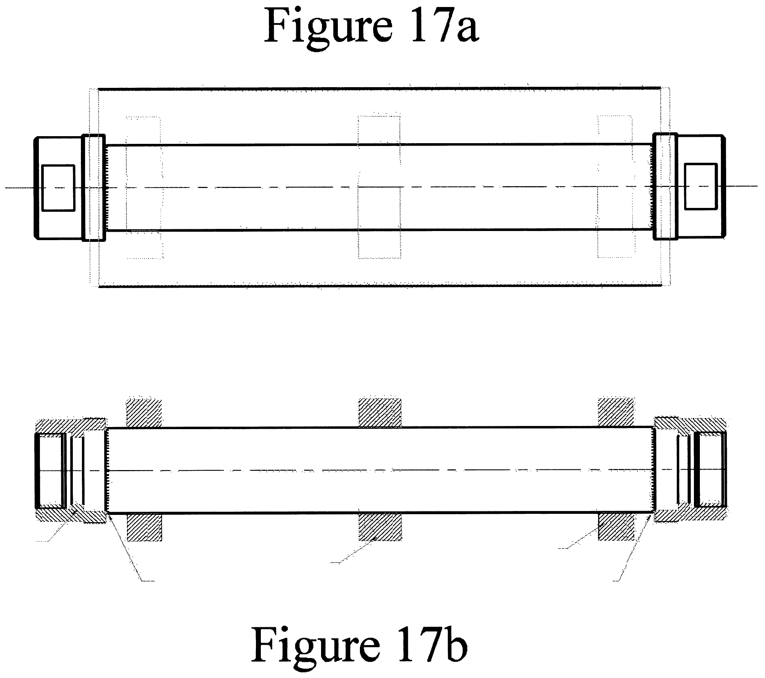

Les figures 17a et 17b illustrent respectivement une coupe et une section d'un autre mode de réalisation , par exemple adapté à une section de 2 pouces.

### Avantages de l'invention.

Le dispositif qui vient d'être décrit permet d'améliorer considérablement la cinétique et la thermodynamique d'une combustion d'un hydrocarbure et de l'air de combustion
- La diminution de l'énergie d'activation qui réduit l'énergie nécessaire pour brûler le combustible : par conséquent l'énergie utile à égalité d'énergie disponible, augmente.
- L'amélioration de l'interaction de l'air comburant avec le combustible : qui permet la réduction de l'excès d'air ainsi que la diminution des imbrûlés.
La même interaction entre le champ magnétique et l'air de combustion, l'oxygène - l'eau peut être réalisée.

## Revendications

1. Dispositif destiné à faciliter la combustion d'un mélange hydrocarbure fluide ou gazeux et de l'air de combustion comportant :
- un tube interne (10) destiné à recevoir l'écoulement dudit mélange, le tube interne comportant de part et d'autre deux raccords (1, 2)
- un anneau magnétique central (11) destiné à générer un champ magnétique axial dans le voisinage du centre dudit tube interne (10) ;
- deux anneaux magnétiques (12, 13) situés de part et d'autre et maintenu à une distance prédéterminée dudit anneau magnétique central (11) ;
**caractérisé en ce qu'**il comporte:
- un premier pont de connexion permettant une connexion magnétique des deux anneaux magnétiques (12, 13) sans connexion toutefois avec ledit anneau magnétique central (11);
- deux ponts de connexion permettant une connexion magnétique entre ledit anneau magnétique central (11) et chacun des anneaux magnétique de bout en bout.

2. Dispositif selon la revendication 1 **caractérisé en ce qu'**il comporte en outre un carter fermé destiné à protéger lesdits anneaux magnétiques (11, 12, 13) et les ponts de connexion (31, 32, 33), ledit carter fermé étant formé d'un tube externe (43) doté de deux flasques latérales (41, 42)

3. Dispositif selon la revendication 2 **caractérisé en ce qu'**il comporte des espaceurs (21, 22, 23, 24) destinés à maintenir une distance respective entre lesdits anneaux magnétiques (11, 12, 13) et éviter une connexion intempestive entre lesdits ponts de connexion et la paroi dudit carter.

4. Dispositif selon la revendication 3 **caractérisé en ce qu'**il comporte des espaceurs (21, 22) en forme de manchons permettant de maintenir constante une distance entre l'anneau magnétique central (11) et chacun des anneaux magnétiques (12, 13) en bout du tube (10).

5. Dispositif selon la revendication 3 **caractérisé en ce qu'**il comporte des espaceurs (23, 24) en forme de manchons permettant de maintenir constante l'espacement entre lesdits anneaux magnétiques (12, 13) en bout du tube et la flasque latérale correspondante dudit carter (43).

6. Dispositif selon l'une des revendications précédentes, **caractérisé en ce que** chacun desdits anneaux magnétiques crée un champ magnétique axial de l'ordre de 1000 à 3000 Gauss.

7. Dispositif selon l'une quelconque des revendications précédentes, **caractérisé en ce qu'**il comporte des raccords de ¾ de pouce.

8. Méthode destinée à faciliter la combustion d'un mélange hydrocarbure fluide ou gazeux comportant les étapes suivantes :
- faire circuler ledit mélange hydrocarbure au sein d'un tube interne (10), ledit tube interne comportant de part et d'autre deux raccords (1, 2)
- générer au sein dudit tube (10) un premier champ magnétique central et axial au moyen d'un anneau magnétique central (11) disposé au centre dudit tube interne (10) ;
**caractérisé en ce que** la méthode comporte les étapes:
- générer aux deux extrémités dudit tube (10) un champ magnétique axial au moyen, respectivement, d'un premier et d'un second anneau magnétique en extrémité (12, 13), et maintenus à une distance prédéterminée dudit anneau magnétique central (11);
- réaliser un premier pont de connexion magnétique entre ledit premier et ledit second anneaux magnétiques (12, 13) en évitant toutefois toute connexion avec ledit anneau magnétique central (11) ;
- réaliser deux ponts de connexion supplémentaire entre ledit anneau magnétique central (11) et chacun des anneaux magnétiques situés de bout en bout.

9. Méthode selon la revendication 8 **caractérisé en ce qu'**il comporte l'étape de maintien d'une distance prédéterminé entre chacun desdits a magnétiques au moyen d'un jeu d'espaceurs (21, 22, 23, 24) réalisés sous forme de manchons disposés sur le tube interne, de manière à éviter une connexion intempestive entre lesdits ponts de connexion et la paroi dudit carter.

## Patentansprüche

1. Vorrichtung, die die Verbrennung einer flüssigen oder gasförmigen Kohlenwasserstoffmischung und Verbrennungsluft erleichtern soll, mit:
- einem zentralen magnetischen Ring (11), um ein axiales Magnetfeld in der Nähe der Mitte des genannten Innenrohrs (10) zu erzeugen;
- zwei magnetischen Ringen (12, 13), die an beiden Seiten gelegen sind und in einem vorgegebenen Abstand von dem genannten zentralen magnetischen Ring (11) gehalten werden;
**gekennzeichnet dadurch, dass** das Verfahren folgende Schritte umfasst:
- eine erste Verbindungsbrücke ermöglicht eine magnetische Verbindung der beiden magnetischen Ringe (12, 13) doch ohne Verbindung mit dem zentralen magnetischen Ring (11);
- zwei Verbindungsbrücken ermöglichen eine durchgehende magnetische Verbindung zwischen dem zentralen magnetischen Ring (11) und jedem der magnetischen Ringe.

2. Vorrichtung nach Anspruch 1, **gekennzeichnet dadurch, dass** sie außerdem ein geschlossenes Gehäuse umfasst, um die magnetischen Ringe (11, 12, 13) und die Verbindungsbrücken (31, 32, 33) zu schützen, wobei das geschlossene Gehäuse von einem Außenrohr (43) mit zwei seitlichen Flanschen (41, 42) gebildet wird,

3. Vorrichtung nach Anspruch 2, **gekennzeichnet dadurch, dass** sie Abstandshalter (21, 22, 23, 24) umfasst, um einen Abstand zwischen den magnetischen Ringen (11, 12, 13) beizubehalten und eine ungewollte Verbindung zwischen den Verbindungsbrücken und der Wand des Gehäuses zu vermeiden.

4. Vorrichtung nach Anspruch 3, **gekennzeichnet dadurch, dass** sie Abstandshalter (21, 22) in Form von Muffen umfasst, wodurch es möglich wird, einen Abstand zwischen dem zentralen magnetischen Ring (11) und jedem der magnetischen Ringe (12, 13) am Ende des Rohrs (10) konstant zu halten.

5. Vorrichtung nach Anspruch 3, **gekennzeichnet dadurch, dass** sie Abstandshalter (23, 24) in Form von Muffen umfasst, wodurch es möglich wird, den Abstand zwischen den magnetischen Ringen (12, 13) am Ende des Rohrs und dem entsprechenden seitlichen Flansch des Gehäuses (43) konstant zu halten.

6. Vorrichtung nach einem der vorhergehenden Ansprüche, **gekennzeichnet dadurch, dass** jeder der genannten magnetischen Ringe ein axiales Magnetfeld von ungefähr 1000 bis 3000 Gauss erzeugt.

7. Vorrichtung nach einem beliebigen der vorherigen Ansprüche, **gekennzeichnet dadurch, dass** sie 3/4Zoll-Anschlüsse umfasst.

8. Verfahren, das die Verbrennung einer flüssigen oder gasförmigen Kohlenwasserstoffmischung erleichtern soll, mit folgenden Schritten:
- die Kohlenwasserstoffmischung in einem Innenrohr (10) zirkulieren lassen, wobei das Innenrohr an beiden Seiten zwei Anschlüsse (1, 2) umfasst
- Erzeugen eines ersten zentralen und axialen Magnetfelds in dem Rohr (10) mittels eines zentralen magnetischen Ringes (11), der in der Mitte des genannten Innenrohrs (10) angeordnet ist;
**gekennzeichnet dadurch, dass** das Verfahren folgende Schritte umfasst:
- Erzeugen eines axialen Magnetfelds an den beiden Enden des genannten Rohrs (10) mittels eines ersten bzw. eines zweiten magnetischen Rings am Ende (12, 13), die in einem vorgegebenen Abstand von dem zentralen magnetischen Ring (11) gehalten werden;
- Herstellung einer ersten magnetischen Verbindungsbrücke zwischen dem ersten und dem zweiten magnetischen Ring (12, 13) unter Vermeidung jeder Verbindung mit dem zentralen magnetischen Ring (11);
- Herstellung von zwei zusätzlichen Verbindungsbrücken zwischen dem zentralen magnetischen Ring (11) und jedem der an einem Ende gelegenen magnetischen Ringe.

9. Verfahren nach Anspruch 8, **gekennzeichnet dadurch, dass** es den Schritt des Beibehaltens eines vorgegebenen Abstands zwischen jedem der genannten magnetischen Ringe mittels eines Satzes von Abstandshaltern (21, 22, 23, 24) in Form von Muffen auf dem Innenrohr umfasst, um eine ungewollte Verbindung zwischen den Verbindungsbrücken und der Wand des Gehäuses zu vermeiden

## Claims

1. An apparatus for facilitating the combustion of a fluid or gaseous hydrocarbon mixture with combustion air comprising:
- an inner tube (10) for receiving the flow of said mixture, the inner tube comprising, on either side, two connectors (1, 2),
- a central magnetic ring (11) for generating an axial magnetic field in the vicinity of the center of said inner tube (10);
- two magnetic rings (12, 13) located on either side and maintained at a predetermined distance from said central magnetic ring (11);
**characterized in that** it comprises:
- a first connecting bridge allowing a magnetic connection of the two magnetic rings (12, 13) without connection to said central magnetic ring (11);
- two connecting bridges allowing a magnetic connection between said central magnetic ring (11) and each of the magnetic rings from end to end.

2. The apparatus according to claim 1 **characterized in that** it further comprises a closed housing for protecting said magnetic rings (11, 12, 13) and the connecting bridges (31, 32, 33), said closed housing being formed by an external tube (43) having two side plates (41, 42)

3. The apparatus according to claim 2 **characterized in that** it further comprises spacers (21, 22, 23, 24) for holding a respective distance between said magnetic rings (11, 12, 13) and prevent unintended connection between said connecting bridges and the wall of said housing.

4. The apparatus according to claim 3 **characterized in that** it further comprises sleevev-shaped spacers (21, 22) for maintaining a constant distance between the central magnetic ring (11) and each of the magnetic rings (12, 13) at the end of the tube (10).

5. The apparatus according to claim 3 **characterized in that** it comprises sleeve-shaped spacers (23, 24) for maintaining constant the spacing between said magnetic rings (12, 13) at the end of the tube and the corresponding side flange of said housing (43).

6. The apparatus according to one of the preceding claims, **characterized in that** each of said magnetic rings produces an axial magnetic field of the order of 1000 to 3000 Gauss.

7. The apparatus according to any preceding claim, **characterized in that** is comprises fittings 3/4 inch.

8. A process for facilitating the combustion of a fluid or gaseous hydrocarbon mixture comprising the steps of:
- circulating said hydrocarbon mixture within an inner tube (10), said inner tube having on either side two connectors (1, 2);
- generating within said tube (10) a first central and axial magnetic field by means of a central magnetic ring (11) arranged at the center of said internal tube (10);
**characterized in that** it further comprises the steps :
- generating at both ends of said tube (10) an axial magnetic field by means of, respectively, a first and a second magnetic ring arranged at the ends (12, 13), and maintained at a predetermined distance from said central magnetic ring (11);
- making a first magnetic connection bridge between said first and second magnetic rings (12, 13) while avoiding any connection with said central magnetic ring (11);
- making two additional connecting bridges between said central magnetic ring (11) and each of the magnetic rings located from end to end.

9. The process according to claim 8 **characterized in that** it further comprises the step of maintaining a predetermined distance between each of said magnetic rings thanks to a set of spacers (21, 22, 23, 24) in the form of sleeves disposed on the inner tube, so as to avoid inadvertent connection between said connecting bridge and the wall of said housing.
